# EUROPEAN PATENT APPLICATION

(11) **EP 3 637 257 A1**
(43) Date of publication of application: **15.04.2020**
(21) Application number: 17925826.4
(22) Date of filing: 29.12.2017
(51) Int. Cl.: G06F 9/48

(54) **VIEW SWITCHING**

(30) Priority: 21.09.2017 CN 201710862028
(71) Applicant: Beijing Sankuai Online Technology Co., Ltd, Beijing 100080 (CN)
(72) Inventor: CHEN, Yulin, Beijing 100080 (CN)
(74) Representative: Rooney, John-Paul
(86) International application number: PCT/CN2017/119742
(87) International publication number: WO 2019/056645

(57) **Abstract**

The present disclosure relates to a view switching method, including: capturing a currently displayed first view based on a received view switching request to obtain a first screenshot; displaying the first screenshot, and switching from the first view to a second view; and switching from display of the first screenshot to display of the second view.

## Description

### CROSS-REFERENCE TO RELATED APPLICATIONS

The present application claims priority to Chinese Patent Application No. 201710862028.X, filed on September 21, 2017 and entitled "VIEW SWITCHING METHOD AND APPARATUS AND COMPUTING DEVICE", which is incorporated herein by reference in its entirety.

### BACKGROUND

### Technical Field

The present disclosure relates to view switching.

### Related Art

With the popularization of the Internet, especially, mobile networks, an increasingly large number of product and service providers choose applications (apps) as one of the channels or even as a main channel for interaction with consumers. At present, development modes of apps may include a native mode, a web mode, and a hybrid mode.

### SUMMARY

The objective of the present disclosure is to provide a view switching method and apparatus and a computing device, so as to at least partially overcome one or more problems that result from restrictions and disadvantages in the prior art.

Other characteristics and advantages of the present disclosure will become obvious from the detailed description below or are partially obtained through the practice of the present disclosure.

According to a first aspect of the embodiments of the present disclosure, a view switching method is provided, including: capturing a currently displayed first view based on a received view switching request to obtain a first screenshot; displaying the first screenshot, and switching from the first view to a second view; and switching from display of the first screenshot to display of the second view.

According to a second aspect of the embodiments of the present disclosure, another view switching method is provided, applied to a hybrid app including a web view module and a native module, and including: instructing, by the web view module, the native module based on a received view switching request to capture a currently displayed first view to obtain a first screenshot; displaying, by the native module, the first screenshot, and instructing the web view module to switch from the first view to a second view; and instructing, by the web view module after the switching is completed, the native module to switch from display of the first screenshot to display of the second view.

According to a third aspect of the embodiments of the present disclosure, a view switching apparatus is provided, including: a screenshot module, configured to capture a currently displayed first view according to a received view switching request to obtain a first screenshot; a view switching module, configured to switch from the first view to a second view; and a display module, configured to: display the first screenshot, and switch from display of the first screenshot to display of the second view after the switching by the view switching module is completed.

According to a fourth aspect of the embodiments of the present disclosure, another view switching apparatus is provided, including a web view module and a native module, where the web view module is configured to instruct the native module according to a received view switching request to capture a currently displayed first view to obtain a first screenshot; and the native module is configured to: display the first screenshot, and instruct the web view module to switch from the first view to a second view, and is configured to switch from display of the first screenshot to display of the second view according to an instruction sent by the web view module after the switching is completed.

According to a fifth aspect of the embodiments of the present disclosure, a storage medium storing a computer program is provided, where the computer program is executed by a processor of a computer to enable the computer to perform the method in any foregoing embodiment.

According to a sixth aspect of the embodiments of the present disclosure, a computing device is provided, including: a processor; and a memory, storing instructions executable by the processor, where the processor is configured to perform the method in any foregoing embodiment.

The technical solutions provided in the embodiments of the present disclosure may have the following beneficial effects:
In an embodiment of the present disclosure, display and switching of screenshots are introduced in a view switching process, so that the implementation is simpler than an existing switching solution using a transition animation, thereby saving local computing resources. In addition, a better switching effect can be achieved, thereby improving user experience.

It should be understood that the foregoing general description and the following detailed description are merely exemplary and explanatory, but cannot be used to limit the present disclosure.

### BRIEF DESCRIPTION OF THE DRAWINGS

FIG. 1 is a schematic diagram of a multiple-page application (MPA) according to an embodiment of the present application;
FIG. 2 is a schematic diagram of a single-page application (SPA) according to an embodiment of the present application;
FIG. 3 is a flowchart of a view switching method according to an embodiment of the present disclosure;
FIG. 4a and FIG. 4b are schematic diagrams of view switching based on the embodiment in FIG. 3;
FIG. 5 is a flowchart of a view switching method according to another embodiment of the present disclosure;
FIG. 6a to FIG. 6c are schematic diagrams of view switching based on the embodiment in FIG. 5;
FIG. 7 is a flowchart of a view switching method according to still another embodiment of the present disclosure;
FIG. 8 is a flowchart of a view switching method according to yet another embodiment of the present disclosure;
FIG. 9 is a structural diagram of a view switching apparatus according to an embodiment of the present disclosure;
FIG. 10 is a structural diagram of a view switching apparatus according to another embodiment of the present disclosure; and
FIG. 11 is a schematic diagram of a computing device according to an embodiment of the present disclosure.

### DETAILED DESCRIPTION

The principle and spirit of the present invention are described below with reference to several exemplary implementations. It should be understood that these implementations are merely provided for a person skilled in the art to better understand and further implement the present invention, but are not used to limit the scope of the present invention in any manner. On the contrary, these implementations are provided to make the present disclosure more thorough and complete and convey completely the scope of the present disclosure to a person skilled in the art.

A native app may also be referred to as a native development mode, directly relies on an operating system, and is the most interactive and functional mode. However, native apps require relatively high development costs, need to be independently developed on different platforms (for example, an Android platform and an iOS platform), and further incur high update and maintenance costs. A web app may deploy pages on a server. A user may use a browser to access the web app. A web app requires low development costs and is applicable to different platforms. In addition, the user's local resources are saved since it is not necessary to install an app on a client. However, web apps depend greatly on networks and need to consume traffic. Web apps also cannot invoke a native application programming interface (API) of the user's local system. As a result, web apps may have restricted functions. A hybrid app may also be referred to as a hybrid development mode, and uses both a native element and a web element in the development of an app, so that some advantages of a native app and a web app are combined. A hybrid app can be debugged across different platforms, requires low update and maintenance costs. In addition, hybrid apps can invoke a native API to implement more complete functions, and therefore have found increasingly wide application.

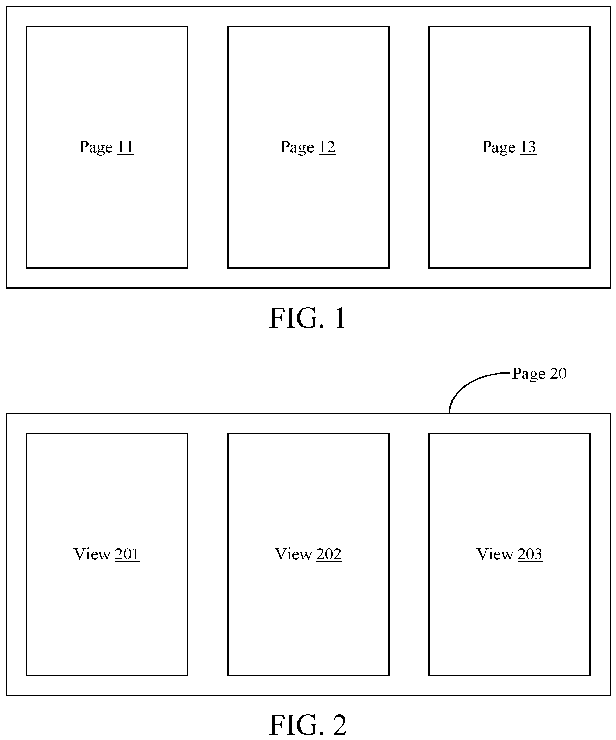

As a development measure used in a web app, an SPA is also a commonly used development measure in a hybrid app. FIG. 1 is a schematic diagram of an MPA according to an embodiment of the present application. FIG. 2 is a schematic diagram of an SPA according to an embodiment of the present application. Referring to FIG. 1 and FIG. 2, a plurality of pages 11 to 13 are used in the MPA to provide a user with an interaction interface, whereas only a single page 20 is loaded in the SPA and views 201 to 203 in the page 20 are used for dynamic update during the interaction between the user and the app, so that the user can use the web app or hybrid app nearly as fast and smoothly as the user uses the native app.

In an embodiment, a view switching process of an SPA in a hybrid app may be implemented in the following two manners. In one manner, no transition animation is set between two successive views, and a view jump may take place in an instant, and the user experience may be relatively poor. In the other manner, a web element is used to simulate a transition animation. However, a native element such as a navigation bar is further included in an interface. In such simulated animation, an interface element other than a web element cannot be controlled. As a result, a switching effect may be relatively poor during a view jump.

A person skilled in the art knows that the implementations of the present invention may be implemented as a system, an apparatus, a device, a method or a computer program product. Therefore, the present disclosure may be specifically implemented in the following forms, that is, complete hardware, complete software (including firmware, resident software, microcode, and the like), or a combination of hardware and software.

According to the implementations of the present invention, a view switching method and apparatus, a medium, and a computing device are provided.

The principle and spirit of the present invention are described below in detail with reference to several representative implementations of the present invention.

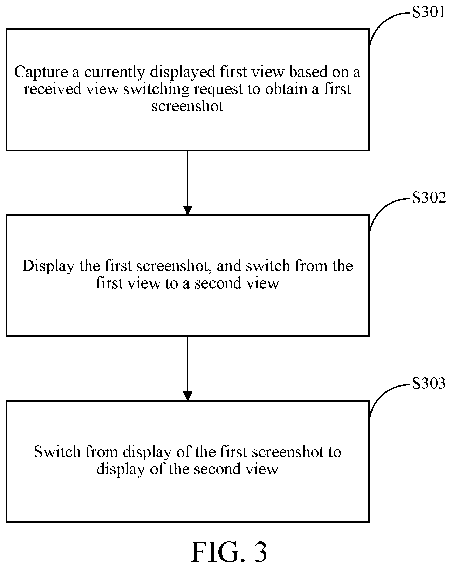

FIG. 3 is a flowchart of a view switching method according to an embodiment of the present disclosure. As shown in the figure, the method in this embodiment includes the following steps S301 to S303. In an embodiment, the method in this embodiment may be performed by a user terminal (for example, a mobile phone) that runs a hybrid app.

Step S301. Capture a currently displayed first view based on a received view switching request to obtain a first screenshot.

The view switching request may be triggered based on a switching operation of a user. The switching operation of user may be, for example, performed based on various manners such as different physical or virtual keys or a touch operation on a touchscreen. This is not limited in the present disclosure.

Step S302. Display the first screenshot, and switch from the first view to a second view.

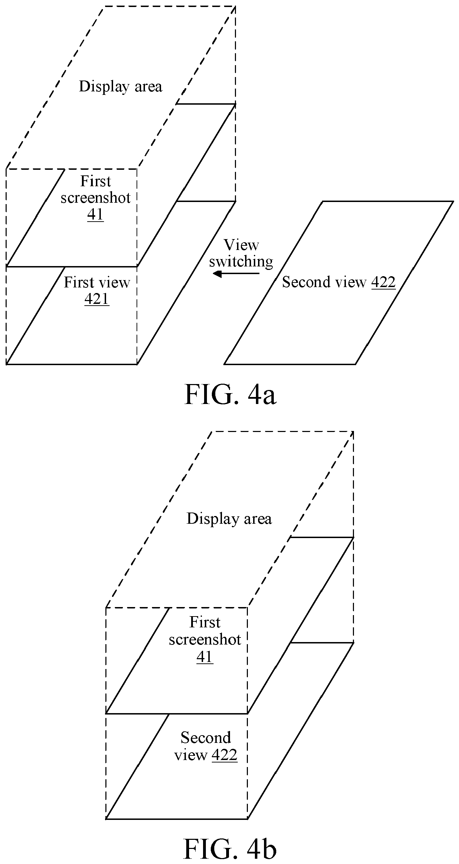

As shown in FIG. 4a, in an embodiment, a first screenshot 41 may be placed on top to cover a first view 421 to implement display of the first screenshot 41. In addition, as shown in FIG. 4b, in the program background, content of the first view 421 is updated with a second view 422 (a target view) to implement content switching from the first view 421 to the second view 422.

Step S303. Switch from display of the first screenshot to display of the second view.

After content switching from the first view to the second view is completed, the second view is in a displayable state. The switching from display of the first screenshot to display of the second view is completed in this step. Switching of view content in step S302 and switching of display in step 303 are separately performed, and therefore may be implemented in different manners. In an embodiment, a hybrid app using an SPA technology is used as an example. The switching from the first view to the second view in step S302 may be implemented by using a web view technology. The switching from display of the first screenshot to display of the second view in step 303 may be implemented by using a native technology. In this way, a better switching effect is achieved without a transition animation. Further, in an embodiment, the screenshot in step S301 may be implemented by using a native technology. For example, different native APIs are invoked to separately capture the screenshot in step S301 and implement the switching of display in step S303. However, this embodiment of the present disclosure is not limited to application to an SPA, and is also applicable to an MPA.

In the view switching method according to the foregoing embodiment, display and switching of screenshots are introduced in a view switching process. The implementation is simpler than a switching solution using a transition animation, thereby saving local computing resources. In addition, a better switching effect can be achieved, thereby improving user experience.

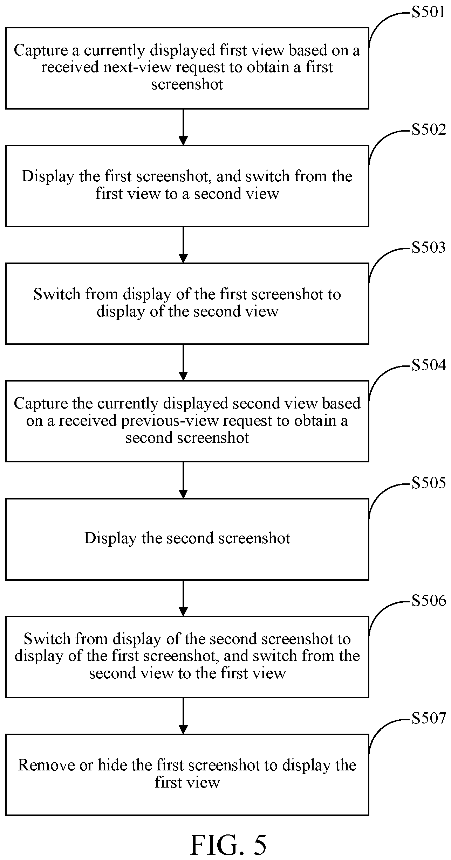

FIG. 5 is a flowchart of a view switching method according to another embodiment of the present disclosure. In an embodiment, the method in this embodiment may be performed by a user terminal (for example, a mobile phone) that runs a hybrid app. As shown in FIG. 5, the method in this embodiment includes the following steps S501 to S507.

Step S501. Capture a currently displayed first view based on a received next-view request to obtain a first screenshot.

Similar to the view switching request in step S301 in the previous embodiment, the next-view request may be triggered based on a specific operation of a user. If a physical or virtual key is used as an example, the specific operation may be, for example, pressing a page down key (for example, a right arrow key). If a touchscreen is used as an example, the specific operation may be, for example, swiping left on the touchscreen. This embodiment of the present disclosure is not limited thereto. Details are not described herein again.

Step S502. Display the first screenshot, and switch from the first view to a second view.

Step S503. Switch from display of the first screenshot to display of the second view.

Steps S501to S503 respectively correspond to steps S301 to S303 in the previous embodiment. Details are not described herein again.

Step S504. Capture the currently displayed second view based on a received previous-view request to obtain a second screenshot.

The previous-view request may be similarly triggered based on another specific operation of the user. If a physical or virtual key is used as an example, the specific operation may be, for example, pressing a page up key (for example, a left arrow key). If a touchscreen is used as an example, the specific operation may be, for example, swiping right on the touchscreen. This embodiment of the present disclosure is not limited thereto. Details are not described herein again.

Step S505. Display the second screenshot.

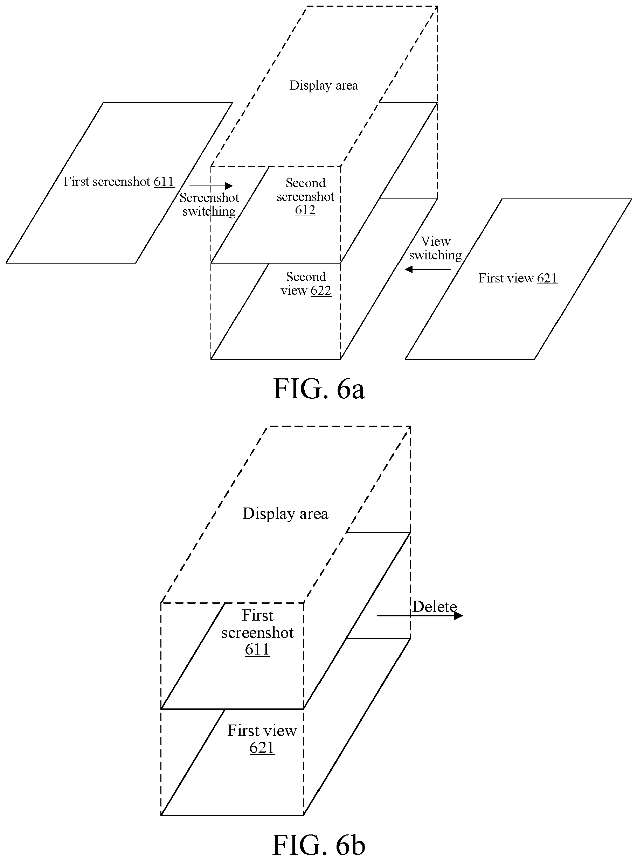

As shown in FIG. 6a, in an embodiment, a second screenshot 612 may be placed on top to cover a second view 622 to implement display of the second screenshot 612.

Step S506. Switch from display of the second screenshot to display of the first screenshot, and switch from the second view to the first view.

In step S503, content of the second view needs to be completely loaded before switching of display can be performed. However, in step 506, the first screenshot obtained and stored in previous step S501 may be combined with the second screenshot to perform switching of display. As shown in FIG. 6b, during switching from display of the second screenshot 612 to display of a first screenshot 611, in the program background, content of second view 622 may be updated with the first view 621 (a target view) to implement content switching from the second view 622 to the first view 621.

Step S507. Remove or hide the first screenshot to display the first view.

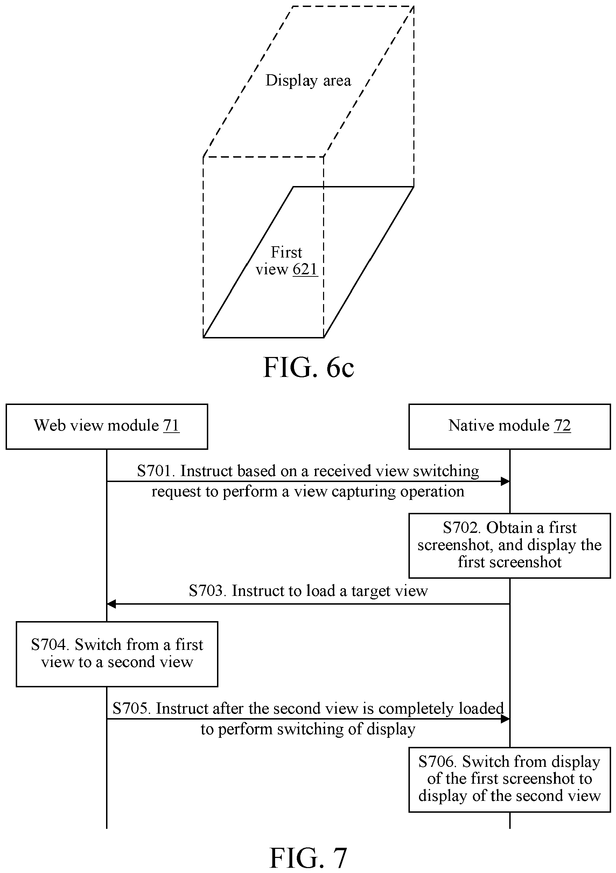

After the content switching from the second view to the first view in step S506 is completed, for example, after the content of the first view is completely loaded, in this step, the covering first screenshot on the top layer may be removed or hidden to display the first view. As shown in FIG. 6c, the first view 621 is displayed after the first screenshot 611 in FIG. 6b is deleted, so as to complete an entire view switching process.

The switching of view content (from the second view to the first view) in step S506 and the switching of display (from the second screenshot to the first screenshot) are separately performed, and therefore may be implemented in different manners. A hybrid app using an SPA technology is still used as an example. In step S506, the switching from display of the second screenshot to display of the first screenshot may be implemented by using a native technology, and the switching from the second view to the first view may be implemented by using a web view, so that a better switching effect is achieved without a transition animation.

In the view switching method according to the foregoing embodiment, display and switching of screenshots are introduced in both processes of switching to a next view and to a previous view. The implementation is simpler than a switching solution using a transition animation, thereby saving local computing resources. In addition, a better switching effect can be achieved, thereby improving user experience.

It should be noted that both the next-view request and the previous-view request in the foregoing embodiment may be considered as the view switching request in step S301. Therefore, in another embodiment, a view switching operation may be directly performed based on step S301 to S303 when either the next-view request in step S501 is received or the previous-view request in step S504 is received, which also falls within the protection scope of the embodiment in FIG. 3. Details are not described herein again.

In addition, the hybrid app using an SPA technology continues to be used as an example. A page view provided based on a web view technology usually includes a native element such as a navigation bar. For example, an operation key such as a previous-page key may be provided in the navigation bar. In an embodiment, when a switch-back operation for the native element is received, it is triggered to generate the previous-view request, so that the process turns to step S504 in FIG. 5 or the previous-view request is directly processed as the view switching request based on step S301 in FIG. 3. Details are not described herein again.

FIG. 7 is a flowchart of a view switching method according to still another embodiment of the present disclosure. In this embodiment, the view switching method may be applied to a hybrid app including a web view module and a native module. As shown in FIG. 7, the method in this embodiment includes the following steps S701 to S706.

Step S701. A web view module 71 instructs a native module 72 based on a received view switching request to perform a view capturing operation.

Step S702. The native module 72 captures a first view to obtain a first screenshot, and displays the first screenshot.

Step S703. The native module 72 instructs the web view module 71 to load a target view (a second view).

Step S704. The web view module 71 switches view content from the first view to the second view.

Step S705. The web view module 71 instructs the native module 72 after the second view is completely loaded to perform switching of display.

Step S706. The native module 72 switches from display of the first screenshot to display of the second view.

In an embodiment, the hybrid app may include a page based on an SPA. The page may include the first view and the second view.

In the view switching method according to the foregoing embodiment, display and switching of screenshots are introduced in a view switching process, so that the implementation is simpler than a switching solution using a transition animation, thereby saving local computing resources. In addition, a better switching effect can be achieved, thereby improving user experience.

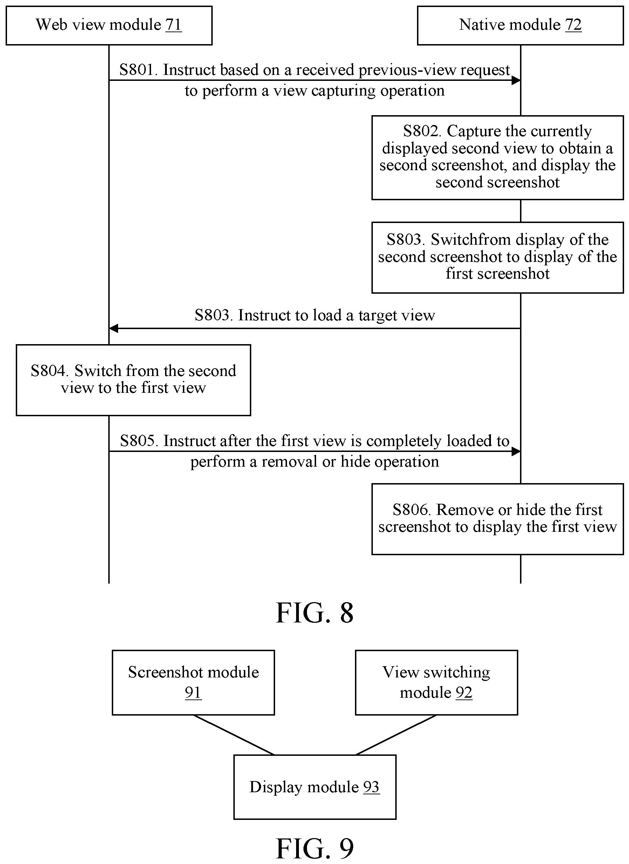

FIG. 8 is a flowchart of a view switching method according to yet another embodiment of the present disclosure. This embodiment may be performed following the foregoing embodiment in FIG. 7. As shown in FIG. 8, the method in this embodiment includes the following steps S801 to S806.

Step S801. The web view module 71 instructs the native module 72 based on a received previous-view request to perform a view capturing operation.

Step S802. The native module 72 captures the currently displayed second view to obtain a second screenshot, and displays the second screenshot.

Step S803. The native module 72 switches from display of the second screenshot to display of the first screenshot, and instructs the web view module 71 to load a target view (the first view).

Step S804. The web view module 71 switches the view content from the second view to the first view.

Step S805. The web view module 71 instructs the native module 72 after the first view is completely loaded to perform a removal or hide operation.

Step S805. The native module 72 removes or hides the first screenshot to display the first view.

In the view switching method according to the foregoing embodiment, display and switching of screenshots are introduced in a process of switching to a previous view, so that the implementation is simpler than a switching solution using a transition animation, thereby saving local computing resources. In addition, a better switching effect can be achieved, thereby improving user experience.

An implementation of the present application further provides a view switching apparatus.

FIG. 9 is a structural diagram of a view switching apparatus according to an embodiment of the present disclosure. As shown in the figure, the view switching apparatus in this embodiment includes a screenshot module 91, a view switching module 92, and a display module 93. The screenshot module 91 may be configured to capture a currently displayed first view based on a received view switching request to obtain a first screenshot. The view switching module 92 may be configured to switch from the first view to a second view. The display module 93 may be configured to: display the first screenshot, and switch from display of the first screenshot to display of the second view after the switching by the view switching module is completed.

In the view switching apparatus according to the foregoing embodiment, display and switching of screenshots are introduced in a view switching process, so that the implementation is simpler than a switching solution using a transition animation, thereby saving local computing resources. In addition, a better switching effect can be achieved, thereby improving user experience.

In another embodiment, based on the view switching apparatus shown in FIG. 9, the screenshot module 91 may further be configured to capture the currently displayed second view based on a received previous-view request to obtain a second screenshot. The display module 93 may further be configured to display the second screenshot, and switch from display of the second screenshot to display of the first screenshot. The view switching module 92 may further be configured to switch from the second view to the first view. Further, the screenshot module 91 may further be configured to remove or hide the first screenshot to enable the display module 93 to display the first view.

Because the switching of view content (from the second view to the first view) performed by the view switching module 92 and the switching of display (from the second screenshot to the first screenshot) by the display module 93 are separately performed, and therefore may be implemented in different manners. For example, a hybrid app using an SPA technology is used as an example. The display module 93 may switch from display of the second screenshot to display of the first screenshot by using a native technology, and the view switching module 92 may switch from the second view to the first view by using a web view technology, so that a better switching effect is achieved without a transition animation.

In the view switching apparatus according to the foregoing embodiment, display and switching of screenshots are introduced in both processes of switching to a next view and to a previous view, so that the implementation is simpler than a switching solution using a transition animation, thereby saving local computing resources. In addition, a better switching effect can be achieved, thereby improving user experience.

It should be noted that both the next-view request and the previous-view request in the foregoing embodiment may be considered as the view switching request in the embodiment in FIG. 9. Therefore, in another embodiment, a view switching operation may be directly performed based on the embodiment in FIG. 9 when either the next-view request is received or the previous-view request is received. Details are not described herein again.

In addition, the hybrid app using an SPA technology continues to be used as an example. A page view provided based on a web view technology usually includes a native element such as a navigation bar. For example, an operation key such as a previous-page key may be provided in the navigation bar. In an embodiment, when a switch-back operation for the native element is received, it is triggered to generate the previous-view request, so that the screenshot module 91, the view switching module 92, and the display module 93 may perform processing according to the view switching request. Details are not described herein again.

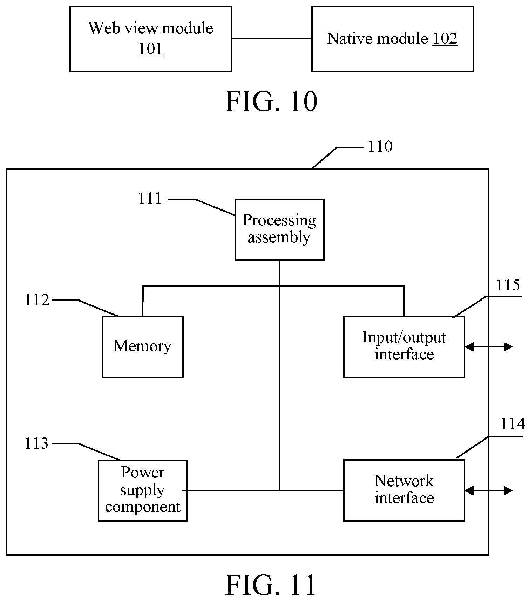

FIG. 10 is a structural diagram of a view switching apparatus according to another embodiment of the present disclosure. As shown in FIG. 10, the view switching apparatus in this embodiment includes a web view module 101 and a native module 102. The web view module 101 may be configured to instruct the native module 102 according to a received view switching request to capture a currently displayed first view to obtain a first screenshot. The native module 102 may be configured to: display the first screenshot, and instruct the web view module 101 to load the second view, and configured to switch from display of the first screenshot to display of the second view according to an instruction sent by the web view module 101 to the native module after the second view is completely loaded.

In the view switching apparatus according to the foregoing embodiment, display and switching of screenshots are introduced in a view switching process, so that the implementation is simpler than a switching solution using a transition animation, thereby saving local computing resources. In addition, a better switching effect can be achieved, thereby improving user experience.

In another embodiment, based on the view switching apparatus shown in FIG. 10, the web view module 101 may further be configured to instruct the native module 102 based on a received previous-view request to capture the currently displayed second view to obtain a second screenshot. The native module 102 may further be configured to: display the second screenshot, continue to switch from display of the second screenshot to display of the first screenshot, and instruct the web view module 101 to load the first view. Furthermore, the web view module 101 may further be configured to instruct the native module 101 after the first view is completely loaded to remove or hide the first screenshot to display the first view.

In the view switching apparatus according to the foregoing embodiment, display and switching of screenshots are introduced in a process of switching to a previous view, so that the implementation is simpler than a switching solution using a transition animation, thereby saving local computing resources. In addition, a better switching effect can be achieved, thereby improving user experience.

For the apparatuses in the foregoing embodiments, specific manners in which the modules perform operations have been described in detail in the embodiments related to the method. Details are not described here.

It should be noted that although several modules or units of the device configured to perform actions are discussed in the foregoing detailed description, such division is not mandatory. In practice, according to the implementations of the present disclosure, the features and functions of two or more modules or units described above may be embodied in one module or unit. In contrast, the features and functions of one module or unit described above may further be embodied by using a plurality of modules or units. Members shown as modules or units may be or may not be physical units, that is, may be integrated or distributed to a plurality of network units. Some or all of the modules may be selected according to actual requirements to achieve the objective of the solution of the present disclosure. A person of ordinary skill in the art can understand and implement the present disclosure without creative efforts.

It is apparent to a person skilled in the art through the description of the foregoing implementations that the exemplary implementations described above may be implemented by using software or may be implemented by using software plus necessary hardware.

For example, in an exemplary implementation, a computer readable storage medium is further provided. The computer readable storage medium stores a computer program. The program is executed by a processor to implement the steps of the method in any foregoing embodiment. Refer to the detailed description of the foregoing embodiments for specific steps of the method. Details are not described herein again.The computer readable storage medium may be a read-only memory (ROM), a random access memory (RAM), a compact disc (CD)-ROM, a magnetic tape, a floppy disk, an optical data storage device or the like.

In another exemplary implementation, a computing device is further provided. The device may be a mobile terminal such as a mobile phone or a tablet computer or may be a terminal device such as a desktop computer or a server. This is not limited in this exemplary implementation. FIG. 11 is a schematic diagram of a computing device 110 according to an exemplary implementation of the present disclosure. For example, the device 110 may be provided as a mobile terminal. Referring to FIG. 11, the device 110 includes a processing assembly 111 that further includes one or more processors and a memory resource represented by a memory 112. The memory 112 is configured to store instructions, for example, an application, executable by the processing assembly 111. The application stored in the memory 112 may include one or more modules, each of which corresponds to a group of instructions. In addition, the processing assembly 111 is configured to execute the instructions to perform the foregoing view switching method. Refer to the detailed description of the foregoing method embodiments for the steps of the method. Details are not described herein again.

The apparatus 110 may further include a power supply component 113 configured to perform power management of the apparatus 110, a wired or wireless network interface 114 configured to connect the apparatus 110 to a network, and an input/output (I/O) interface 115. The apparatus 110 may run an operating system such as Android, iOS or similar stored in the memory 112.

After considering the specification and practicing the invention disclosed herein, a person skilled in the art would easily conceive of other implementations of the present disclosure. The present application is intended to cover any variations, uses, or adaptive changes of the present disclosure. Such variations, uses, or adaptive changes follow the general principles of the present disclosure and include common general knowledge or common technical means in the art that is not disclosed in the present disclosure. The specification and the embodiments are merely exemplary, and the real scope and spirit of the present disclosure are set forth in the following claims.

Although the present disclosure has been described with reference to several typical embodiments, it should be understood that the terms used are illustrative and exemplary but are not limitative. The present disclosure can be specifically implemented in many forms without departing from the spirit and essence of the present application, and therefore it should be understood that the foregoing embodiments are not limited to any details above but instead should be widely explained in the spirit and scope defined by the appended claims. Therefore, all changes and variations falling within the claims and equivalent scope thereof should all be covered by the appended claims.

## Claims

1. A view switching method, comprising:
capturing a currently displayed first view based on a received view switching request to obtain a first screenshot;
displaying the first screenshot;
switching from the first view to a second view; and
switching from display of the first screenshot to display of the second view.

2. The method according to claim 1, further comprising:
capturing the currently displayed second view based on a received previous-view request to obtain a second screenshot;
displaying the second screenshot;
switching from display of the second screenshot to display of the first screenshot;
switching from the second view to the first view; and
removing or hiding the first screenshot to display the first view.

3. The method according to claim 1 or 2, wherein the method is applied to a hybrid app comprising a web view and a native element, the hybrid app comprises a page based on a single-page application (SPA), and the page comprises the first view and the second view.

4. The method according to claim 3, wherein the capturing a currently displayed first view and the switching from display of the first screenshot to display of the second view are performed by invoking a native application programming interface (API).

5. The method according to claim 3, further comprising:
triggering the previous-view request based on a received switch-back operation for the native element.

6. A view switching method, applied to a hybrid app comprising a web view module and a native module, and comprising:
instructing, by the web view module, the native module based on a received view switching request to capture a currently displayed first view to obtain a first screenshot;
displaying, by the native module, the first screenshot, and instructing the web view module to load a second view; and
instructing, by the web view module after the second view is completely loaded, the native module to switch from display of the first screenshot to display of the second view.

7. The method according to claim 6, further comprising:
instructing, by the web view module, the native module based on a received previous-view request to capture the currently displayed second view to obtain a second screenshot;
displaying, by the native module, the second screenshot;
switching, by the native module, from display of the second screenshot to display of the first screenshot, and instructing the web view module to load the first view; and
instructing, by the web view module, the native module after the first view is completely loaded to remove or hide the first screenshot to display the first view.

8. The method according to claim 6 or 7, wherein the hybrid app comprises a page based on a single-page application (SPA), and the page comprises the first view and the second view.

9. A view switching apparatus, comprising:
a screenshot module, configured to capture a currently displayed first view based on a received view switching request to obtain a first screenshot;
a view switching module, configured to switch from the first view to a second view; and
a display module, configured to: display the first screenshot, and switch from display of the first screenshot to display of the second view after the switching by the view switching module is completed.

10. A view switching apparatus, comprising:
a web view module, configured to receive a view switching request; and
a native module, configured to: according to the view switching request notified by the web view module,
capture a currently displayed first view to obtain a first screenshot;
display the first screenshot;
instruct the web view module to load a second view; and
switch from display of the first screenshot to display of the second view after an instruction sent by the web view module after the second view is completely loaded is received.

11. A storage medium storing a computer program, wherein the computer program is executed by a processor of a computer to enable the computer to perform the method according to any one of claims 1 to 8.

12. A computing device, comprising:
a processor; and
a memory, storing instructions executable by the processor, wherein
the processor is configured to perform the method according to any one of claims 1 to 8.
